# EUROPÄISCHE PATENTANMELDUNG

(11) **EP 3 305 520 A1**
(43) Veröffentlichungstag der Anmeldung: **11.04.2018**
(21) Anmeldenummer: 17192633.0
(22) Anmeldetag: 22.09.2017
(51) Int. Cl.: B32B 18/00, F27D 1/00

(54) **VERFAHREN ZUR HERSTELLUNG EINES BAUELEMENTS UND BAUELEMENT**

(30) Priorität: 04.10.2016 DE 102016219214
(71) Anmelder: Schunk Kohlenstofftechnik GmbH, 35452 Heuchelheim (DE)
(72) Erfinder: SCHNEIDER, Martin, 35444 Biebertal (DE); PFEIFER, Sarah, 35080 Bad Endbach (DE)
(74) Vertreter: advotec.

(57) **Zusammenfassung**

Die Erfindung betrifft ein Verfahren zur Herstellung eines Bauelements (10) und ein Bauelement für insbesondere Hochtemperaturanwendungen oder dergleichen, wobei das Bauelement aus kohlenstofffaserverstärkten Kohlenstoff und einer Graphitfolie (13) ausgebildet wird, wobei aus Kohlenstofffasern ausgebildete Faserlagen (14) zusammen mit der Graphitfolie zu einem Stapel (15) angeordnet werden, wobei die Faserlagen mit einem Binder imprägniert werden, wobei der Binder ausgehärtet und pyrolisiert wird, wobei die Graphitfolie in dem Stapel zwischen zumindest zwei Faserlagen angeordnet wird.

## Beschreibung

Die Erfindung betrifft ein Verfahren zur Herstellung eines Bauelements und Bauelement für insbesondere Hochtemperaturanwendungen oder dergleichen, wobei das Bauelement aus kohlenstofffaserverstärktem Kohlenstoff von einer Graphitfolie ausgebildet wird, wobei aus Kohlenstofffasern ausgebildete Faserlagen zusammen mit der Graphitfolie zu einem Stapel angeordnet werden, wobei die Faserlagen mit einem Binder imprägniert werden, wobei der Binder ausgehärtet und pyrolisiert wird.

Bauelemente beziehungsweise Formteile der eingangs genannten Art werden regelmäßig in technischen Gebieten eingesetzt, bei denen die Bauelemente hohen Temperaturen ausgesetzt sind, wie beispielsweise im Ofenbau. Diese Bauelemente werden insbesondere zur Auskleidung von Öfen verwendet, in denen eine Wärmebehandlung von Werkstücken oder dergleichen erfolgt. Ofenauskleidungen bilden eine thermische Isolierung der regelmäßig aus Stahl hergestellten Ofenwand gegenüber der Ofenatmosphäre aus. Aufgrund einer dynamischen Temperaturbelastung, der die Ofenkleidung bedingt durch die häufigen Aufheiz- und Abkühlvorgänge unterliegt, erfährt die Ofenauskleidung eine thermisch bedingte Alterung, die je nach Art der Beanspruchung einen Austausch der Ofenauskleidung nach einer definierten Anzahl von Betriebszyklen des Ofens erfordert. Um eine thermische Isolierschicht der Ofenauskleidung oder die Ofenwand vor einer Oxidation zu schützen, ist es bekannt auf eine Oberfläche der aus kohlenstofffaserverstärkten Kohlenstoff ausgebildeten Ofenauskleidung beziehungsweise der jeweiligen Bauelemente eine Graphitfolie aufzubringen. Mittels der Graphitfolie werden die Bauelemente der Ofenauskleidung gasundurchlässig, was sich vorteilhaft auf eine Lebensdauer eines zur thermischen Isolation eingesetzten Filzes und der Ofenwände auswirkt. Intervalle zum Austausch einer Ofenauskleidung können so vorteilhaft verlängert werden.

Die Graphitfolie wird regelmäßig bei der Herstellung des kohlenstofffaserverstärkten Kohlenstoffs auf eine aus Kohlenstofffasern ausgebildete Faserlage, die mit einem Binder imprägniert ist, aufgebracht und dann zusammen mit der imprägnierten Faserlage zumindest einer Temperaturbehandlung zur Härtung und Pyrolyse des Binders unterworfen. Dabei kommt es zu einer festen Verbindung der Graphitfolie und den durch den Pyrolysevorgang ausgebildeten kohlenstofffaserverstärkten Kohlenstoff. Mit diesem bekannten Herstellungsverfahren ist es prinzipiell möglich auch andere, nicht primär Ofenauskleidungen betreffende, für Hochtemperaturanwendungen geeignete, insbesondere gasdichte Bauteile herzustellen. Weiter sind Herstellungsverfahren bekannt, bei denen Isolationsfilze mit einer Graphitfolie beklebt werden.

Bei den bekannten Herstellungsverfahren beziehungsweise Bauelementen ist nachteilig, dass die Graphitfolie sehr empfindlich gegenüber Beschädigungen ist, und bei einer Beschädigung gasdurchlässig werden kann. Eine Beschädigung einer Graphitfolie kann jedoch bereits schon dadurch erfolgen, dass bei beispielsweise einer Beschickung eines Ofens die Graphitfolie auf einer Oberfläche des kohlenstofffaserverstärkten Kohlenstoffs Kratzer erhält. Auch im Rahmen der Herstellung der Bauelemente kann es leicht zu einer Beschädigung der Graphitfolie, insbesondere bei einer Kaschierung eines Stapels aus Faserlagen mit der Graphitfolie kommen. Weiter können beispielsweise bei der Härtung des Binders entstehende Kondensationsprodukte Blasen unter der Graphitfolie bilden, wodurch es zu einer Ablösung der Graphitfolie von dem Stapel kommt. Auch besteht die Möglichkeit, Bauelemente des kohlenstofffaserverstärkten Kohlenstoffs mit Graphitfolie zu bekleben, was jedoch insbesondere bei profilförmigen Bauelementen sehr aufwändig ist.

Der vorliegenden Erfindung liegt daher die Aufgabe zugrunde, ein Verfahren zur Herstellung eines Bauelements für Hochtemperaturanwendungen und ein Bauelement vorzuschlagen, welches gegenüber einer mechanischen Beschädigung unempfindlich und dennoch einfach herzustellen ist.

Zu dieser Aufgabe wird durch ein Verfahren mit den Merkmalen des Anspruchs 1 und ein Bauelement mit den Merkmalen des Anspruchs 16 gelöst.

Bei dem erfindungsgemäßen Verfahren zur Herstellung eines Bauelements für insbesondere Hochtemperaturanwendungen oder dergleichen wird das Bauelement aus kohlenstofffaserverstärkten Kohlenstoff von einer Graphitfolie ausgebildet, wobei aus Kohlenstofffasern ausgebildete Faserlagen zusammen mit der Graphitfolie zu einem Stapel angeordnet werden, wobei die Faserlagen mit einem Binder imprägniert werden, wobei der Binder ausgehärtet und pyrolisiert wird, wobei die Graphitfolie im Stapel zwischen zumindest zwei Faserlagen angeordnet wird.

Demnach ist vorgesehen, bereits vor Ausbildung des kohlenstofffaserverstärkten Kohlenstoffs durch Aushärten und Pyrolisieren des Binders die Graphitfolie innerhalb des Stapels aus Faserlagen anzuordnen. Der Stapel weist dazu zumindest zwei Faserlagen auf, die die Graphitfolie zwischen sich aufnehmen. Dadurch, dass die Graphitfolie innerhalb des Stapels angeordnet beziehungsweise von dem kohlenstofffaserverstärkten Kohlenstoff abgedeckt ist, wird die Graphitfolie wirkungsvoll vor einer mechanischen Beschädigung geschützt. Gleichfalls wird es möglich, die Graphitfolie so in dem Stapel zu platzieren, dass Kondensationsprodukte, die beim Aushärten des Binders entstehen können, leicht entweichen können. Gerade die beidseitige Abdeckung der Graphitfolie mit Faserlagen verhindert wirkungsvoll eine Blasenbildung an der Graphitfolie.

Demnach kann das Bauelement aus zumindest zwei Schichten aus kohlenstofffaserverstärkten Kohlenstoff (CFC) ausgebildet werden, wobei die Graphitfolie dann zwischen den beiden Schichten angeordnet werden kann.

Insbesondere können die Schichten aus jeweils zumindest einem Prepregs ausgebildet werden. Das Bauelement wird dann besonders einfach herstellbar, da die Graphitfolie dann lediglich zwischen zwei oder auch mehr Prepregs gelegt werden muss. Durch die Verwendung der Prepregs haftet die Graphitfolie bereits beim Auflegen auf einen Prepreg an diesem an, was eine Verarbeitung wesentlich vereinfacht.

Die Faserlage kann eine textile Faserlage aus Fasergewebe, Faserflies oder Faserfilz sein, wobei der Binder Harz oder Pech sein kann. Vorzugsweise kann der Binder auch ein Phenolharz sein, mit dem die textile Faserlage bereits imprägniert ist. Optional ist es möglich, auch erst den Stapel mit der Graphitfolie und den textilen Faserlagen auszubilden und dann die textilen Faserlagen mit dem Binder zu imprägnieren.

Vorteilhaft kann das Fasergewebe aus 3 K-, 6 K- und/oder 12 K-Filamentgarnen ausgebildet werden. Die Fasergewebe können je nach Festigkeitsanforderungen an das Bauelement ausgewählt werden.

Darüber hinaus kann der Stapel vor dem Aushärten und/oder der Pyrolyse verdichtet werden. Die Verdichtung kann mittels einer Presse oder auch eines Vakuums erfolgen, sodass eventuelle Lufteinschlüsse in dem Stapel ausgeschlossen werden können und auch gegebenenfalls eine gewünschte Maßhaltigkeit des Bauelements erzielt wird.

Wenn der Stapel nachfolgend der Pyrolyse grafitiert wird, wird es möglich, ein besonders stabiles Bauelement auszubilden. Der nach der Pyrolyse poröse kohlenstofffaserverstärkter Kohlenstoff kann dann beispielsweise in einem weiteren Verfahrensschritt durch Gasphasenabscheidung (CVI, CVD) infiltriert oder beschichtet werden. Auch kann vorgesehen sein, den kohlenstofffaserverstärkten Kohlenstoff wiederholt mit Harz zu tränken und zu pyrolisieren beziehungsweise zu grafitieren. Prinzipiell ist es auch möglich, den kohlenstofffaserverstärkten Kohlenstoff beziehungsweise dessen Poren mit Siliziumcarbid oder Pyrokohlenstoff auszufüllen.

Eine erste Faserlage des Stapels kann aus einem ersten Fasergewebe und eine zweite Faserlage des Stapels aus einem von dem ersten Fasergewebe abweichenden, zweiten Fasergewebe ausgebildet werden. Auch hier kann durch die Verwendung unterschiedlicher Fasergewebe für die jeweiligen Faserlagen einer Festigkeitsanforderung an das betreffende Bauteil Rechnung getragen werden.

Die Graphitfolie kann in dem Stapel als eine mittlere Lage zwischen Faserlagen angeordnet werden. Demnach kann die Graphitfolie beispielsweise in dem Stapel zwischen einer Lagenanordnung aus zwei Faserlagen und zwei Faserlagen angeordnet werden. So kann die Graphitfolie eine mittlere Schicht des Bauelements ausbilden. Dies kann dann besonders vorteilhaft sein, wenn Kondensationsprodukte aus den jeweiligen Faserlagen leicht entweichen sollen.

In einer weiteren Ausführungsform kann die Graphitfolie in dem Stapel als eine von einer mittleren Lage abweichende Lage zwischen Faserlagen angeordnet werden. Beispielsweise kann die Graphitfolie in dem Stapel zwischen einer Lagenanordnung aus drei Faserlagen und einer Faserlage angeordnet werden. So wird es möglich, die Graphitfolie dicht an einer Form zur Formgebung des Stapels beziehungsweise Bauelements anzuordnen, da auf Seite der Form Kondensationsprodukte eher schlecht entweichen können.

Wenn die Graphitfolie zumindest teilweise an ihren Rändern von den Faserlagen überdeckt wird, kann die Graphitfolie vollständig in den kohlenstofffaserverstärkten Kohlenstoff eingeschlossen werden beziehungsweise von diesem umgeben sein. Die an der Graphitfolie anliegenden Faserlagen gehen dann zumindest teilweise über die Ränder der Graphitfolie hinaus, wodurch ein sicherer Einschluss der Graphitfolie in dem kohlenstofffaserverstärkten Kohlenstoff möglich wird. Auch kann eine eventuelle Delamination von Faserlagen des kohlenstofffaserverstärkten Kohlenstoffs von der Graphitfolie so verhindert werden.

Folglich können die Faserlagen nur abschnittsweise mit der Graphitfolie überdeckt werden, wobei die Graphitfolie eine kleinere Fläche aufweisen kann als eine Faserlage. Beispielsweise kann die Graphitfolie dann alleine in einem ersten Abschnitt eines Profilelements angeordnet sein, wobei ein zweiter Abschnitt des Profilelements dann frei von einer Graphitfolie ist.

Der Stapel kann an einer Profilnegativform umgeformt werden oder der Stapel kann an der Profilnegativform ausgebildet werden. Beispielsweise kann zunächst der Stapel durch Anordnung der Graphitfolie und der Faserlagen ausgebildet werden, wobei vor einer Härtung des Binders der Stapel an die Profilnegativform durch Unformen, beispielsweise mittels Druck oder Vakuum, angepasst werden kann. Alternativ kann der Stapel direkt an der Profilnegativform durch Schichten der Faserlagen und der Graphitfolie ausgebildet werden.

Wesentlich ist jedoch, dass der Stapel vor dem Aushärten des Binders umgeformt werden kann. Je nach Dicke des Stapels kann natürlich auch vorgesehen sein, den Stapel nach dem Aushärten des Binders umzuformen, sofern dies möglich ist. Dann kann auch vorgesehen sein, den Stapel mechanisch zu bearbeiten, beispielsweise durch Stanzen, Fräsen oder Bohren. Vorteilhaft kann zwischen der Graphitfolie und der Profilnegativform eine einzige Faserlage angeordnet werden. Durch eine einzelne Faserlage wird es möglich, die Graphitfolie vor mechanischen Beschädigungen zu schützen.

Das erfindungsgemäße Bauelement für insbesondere Hochtemperaturanwendungen oder dergleichen, ist aus kohlenstofffaserverstärkten Kohlenstoff und einer Graphitfolie ausgebildet, wobei aus Kohlenstofffasern ausgebildete Faserlagen des kohlenstofffaserverstärkten Kohlenstoffs zusammen mit der Graphitfolie zu einem Stapel angeordnet sind, wobei die Graphitfolie in dem Stapel zwischen zumindest zwei Faserlagen angeordnet ist. Die Vorteile des erfindungsgemäßen Bauelements betreffend wird auf die Vorteilsbeschreibung des erfindungsgemäßen Verfahrens verwiesen.

Wenn das Bauelement ein Profilelement ist, kann es besonders gut zur Auskleidung von Öfen eingesetzt werden. Beispielsweise kann das Bauelement ein U-Profil, ein L-Profil oder auch ein treppenförmiges Profil sein. In einer besonders einfachen Ausführungsform kann das Bauelement eine Platte sein.

Weiter kann das Bauelement biegbar ausgebildet sein, wobei das Bauelement auch so dünn ausgebildet sein kann, dass es einfach zu biegen ist. Das Bauelement kann demnach in Art einer Folie ausgebildet sein. Das Bauelement kann dann einfach zur im Wesentlichen gasdichten Umhüllung von Rohren verwendet werden. So kann ein Rohr einfach durch Biegen des Bauelements von diesem umgeben werden.

Insbesondere durch die Anordnung der Graphitfolie im Stapel kann das Bauelement dann auch gasdicht sein.

Weitere vorteilhafte Ausführungsformen eines Bauelements ergeben sich aus den auf den Verfahrensanspruch 1 rückbezogenen Unteransprüchen.

Der erfindungsgemäße Hochtemperaturofen weist ein erfindungsgemäßes Bauelement auf.

Erfindungsgemäß wird ein aus kohlenstofffaserverstärkten Kohlenstoff und einer Graphitfolie ausgebildetes Bauelement, wobei bei dem Bauelement aus Kohlenstofffasern ausgebildete textile Faserlagen des kohlenstofffaserverstärkten Kohlenstoffs zusammen mit der Graphitfolie zu einem Stapel angeordnet sind, wobei die Graphitfolien in dem Stapel zwischen zumindest zwei Faserlagen angeordnet sind, zur Ausbildung einer Auskleidung eines Hochtemperaturofens verwendet. Weitere Ausführungsformen einer Verwendung eines Bauelements ergeben sich aus den auf den Verfahrensanspruch 1 und den Erzeugnisanspruch 15 rückbezogenen Unteransprüchen.

Nachfolgend werden bevorzugte Ausführungsformen der Erfindung unter Bezugnahme auf die beigefügten Zeichnungen näher erläutert.

Es zeigen:
- Fig. 1:: eine schematische Darstellung eines Bauelements nach einer ersten Ausführungsform;
- Fig. 2:: eine schematische Darstellung eines Bauelements nach einer zweiten Ausführungsform;
- **Fig. 3:**: eine schematische Darstellung eines Stapels mit einer Profilnegativform;
- **Fig. 4:**: eine weitere Darstellung des Stapels mit der Profilnegativform;
- **Fig. 5:**: eine schematische Darstellung eines Bauelements nach einer vierten Ausführungsform;
- **Fig. 6:**: eine schematische Darstellung eines Bauelements nach einer fünften Ausführungsform;
- **Fig. 7:**: eine schematische Darstellung eines Bauelements nach einer sechsten Ausführungsform;
- **Fig. 8:**: eine schematische Darstellung eines Bauelements nach einer siebten Ausführungsform;
- **Fig. 9:**: eine schematische Darstellung eines Bauelements nach einer achten Ausführungsform;
- **Fig. 10:**: eine schematische Darstellung eines Bauelements nach einer neunten Ausführungsform;
- **Fig. 11:**: eine schematische Darstellung eines Bauelements nach einer zehnten Ausführungsform.

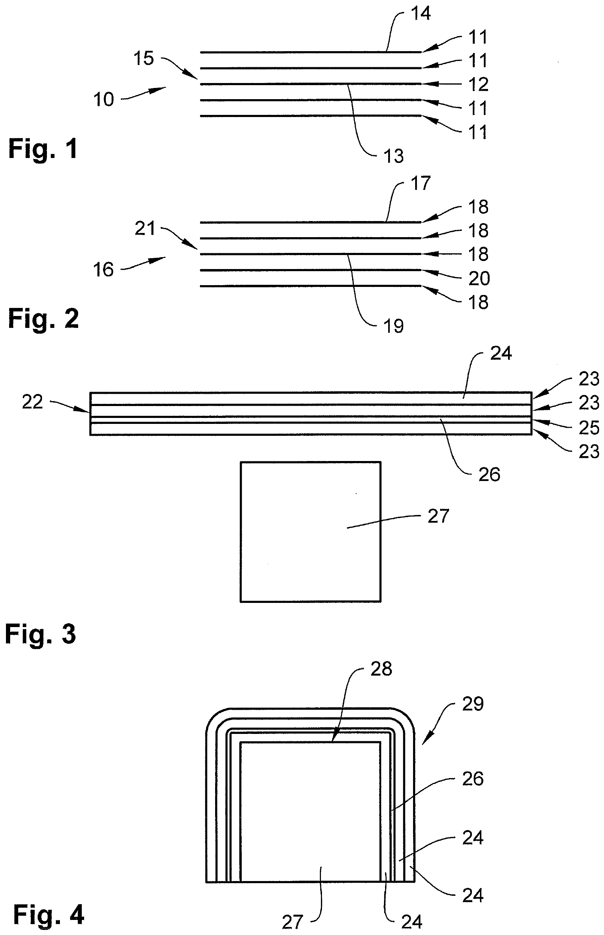

Die **Fig. 1** zeigt eine stark vereinfachte Darstellung eines plattenförmigen Bauelements 10 in einer Schnittansicht. Das Bauelement weist vier Schichten 11 auf, die aus kohlenstofffaserverstärkten Kohlenstoff bestehen. Weiter weist das Bauelement 10 eine Schicht 12 aus einer Graphitfolie 13 auf. Die Schichten 11 sind durch Anordnung von mit einem Binder imprägnierten Faserlagen 14 aus Kohlenstofffasern zusammen mit der Graphitfolie 13 zu einem Stapel 15 und dem Aushärten sowie der Pyrolyse des Binders ausgebildet, wodurch das Bauelement 10 erhalten wurde. Insbesondere ist die Graphitfolie 13 zwischen den Faserlagen 14 in dem Stapel 15 angeordnet.

Die **Fig. 2** zeigt ein Bauelement 16 mit Faserlagen 17 enthaltenen Schichten 18 und einer durch eine Graphitfolie 19 ausgebildeten Schicht 20. Die Graphitfolie 19 ist in dem so ausgebildeten Stapel 21 so angeordnet, dass die Graphitfolie 19 von einer Schicht 18 und drei Schichten 18 abgedeckt ist.

Die **Fig. 3** zeigt, einen Stapel 22 mit Schichten 23 aus Faserlagen 24 mit einem hier nicht dargestellten Binder, der noch nicht ausgehärtet wurde, und einer Schicht 25 aus einer Graphitfolie 16. Der Stapel 22 ist im Wesentlichen plattenförmig ausgebildet und weist eine von einer Profilnegativform 27 abweichende Form auf.

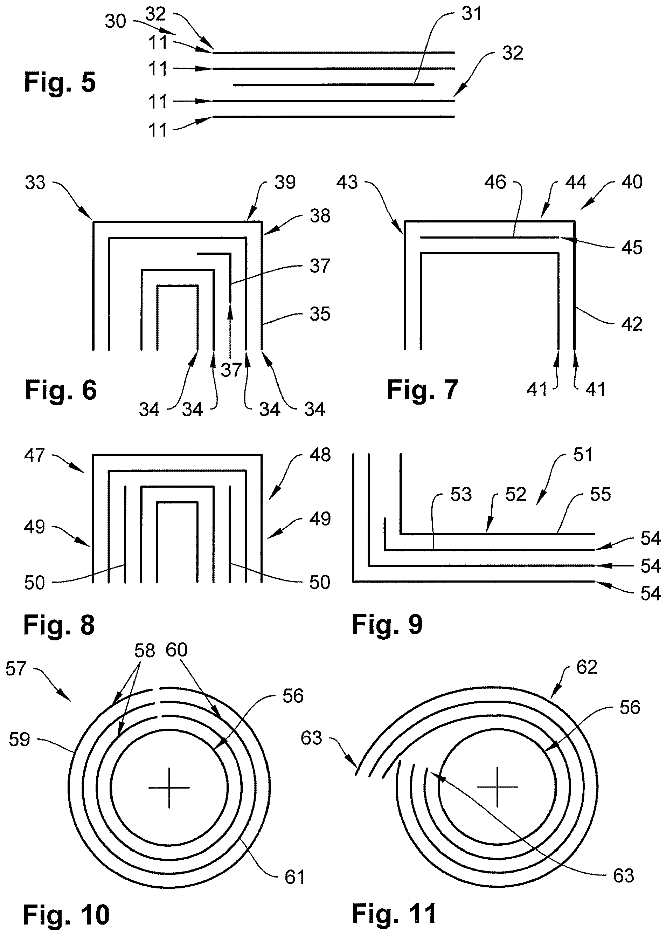

Wie aus der **Fig. 4** zu ersehen ist, wurde der Stapel 22 an der Profilnegativform 27 so umgeformt, dass er an einer Oberfläche 28 der Profilnegativform 27 dicht anliegt. Dabei ist nur eine Schicht 23 zwischen der Graphitfolie 26 und der Oberfläche 28 angeordnet. Insgesamt bildet der umgeformte Stapel 22 ein U-Profil 29 aus. Das U-Profil 29 kann nun durch Aushärten und Pyrolyse des Binders zu einem Bauelement ausgebildet werden. Das in **Fig. 5** gezeigte Bauelement 30 unterscheidet sich von dem Bauelement aus **Fig. 1** dadurch, dass Schichten 11 eine Graphitfolie 31 an ihren Rändern 32 überragen beziehungsweise überlappen. Die Graphitfolie 31 ist dann vollständig innerhalb des Bauelements 30 aufgenommen.

Die **Fig. 6** zeigt ein Bauelement 33 mit Schichten 34 aus Faserlagen 35, wobei eine Schicht 36 auf einer Graphitfolie 37 nur abschnittsweise innerhalb des so ausgebildeten U-Profils 38, in einem Eckbereich 39 des U-Profils 38, angeordnet ist.

Ein weiteres Bauelement 40 weist nach **Fig. 7** lediglich zwei Schichten 41 mit Faserlagen 42 und eine sich in einem Schenkel 43 eines U-Profils 44 alleine erstreckende Schicht 45 aus einer Graphitfolie 46 auf.

Die **Fig. 8** zeigt ein Bauelement 47, welches ein U-Profil 48 ausbildet, in dem alleine in parallelen Schenkeln 49 des U-Profils 48 eine Graphitfolie 50 angeordnet ist.

Die **Fig. 9** zeigt ein Bauelement 51, welches als L-Profil 52 ausgebildet ist, innerhalb dem ebenfalls abschnittsweise eine Graphitfolie 53 zwischen Schichten 54 aus Faserlagen 55 angeordnet ist.

Die **Fig. 10** zeigt ein Rohr 56, um das ein Bauelement 57, welches flexibel ausgebildet ist, herumgelegt ist. Das Bauelement 57 ist mit zwei Schichten 58 aus Faserlagen 59 und einer zwischenliegend angeordneten Schicht 60 aus einer Graphitfolie 61 ausgebildet.

Bei einem Bauelement 62 nach **Fig. 11** ist im Unterschied zu dem Bauelement aus **Fig. 10** das Bauelement 62 so ausgebildet, dass Ränder 63 des Bauelements 62 beim Umwickeln des Rohrs 56 überlappen.

## Patentansprüche

1. Verfahren zur Herstellung eines Bauelements (10, 16, 30, 33, 40, 47, 51, 57, 62) für insbesondere Hochtemperaturanwendungen oder dergleichen, wobei das Bauelement aus kohlenstofffaserverstärkten Kohlenstoff und einer Graphitfolie (13, 19, 26, 31, 37, 46, 50, 53, 61) ausgebildet wird, wobei aus Kohlenstofffasern ausgebildete Faserlagen (14, 17, 24, 35, 42, 55, 59) zusammen mit der Graphitfolie zu einem Stapel (15, 21, 22) angeordnet werden, wobei die Faserlagen mit einem Binder imprägniert werden, wobei der Binder ausgehärtet und pyrolysiert wird,
**dadurch gekennzeichnet,**
**dass** die Graphitfolie in dem Stapel zwischen zumindest zwei Faserlagen angeordnet wird.

2. Verfahren nach Anspruch 1,
**dadurch gekennzeichnet,**
**dass** das Bauelement (10, 16, 30, 33, 40, 47, 51, 57, 62) aus zumindest zwei Schichten (11, 18, 34, 41, 54, 58) aus kohlenstofffaserverstärkten Kohlenstoff (CFC) ausgebildet wird, wobei die Graphitfolie (13, 19, 26, 31, 37, 46, 50, 53, 61) zwischen den beiden Schichten angeordnet wird.

3. Verfahren nach Anspruch 2,
**dadurch gekennzeichnet,**
**dass** die Schichten (11, 18, 34, 41, 54, 58) aus jeweils zumindest einem Prepreg ausgebildet werden.

4. Verfahren nach einem der vorangehenden Ansprüche,
**dadurch gekennzeichnet,**
**dass** die Faserlage (14, 17, 24, 35, 42, 55, 59) eine textile Faserlage aus Fasergewebe, Faserflies oder Faserfilz ist, wobei der Binder Harz oder Pech ist.

5. Verfahren nach Anspruch 4,
**dadurch gekennzeichnet,**
**dass** das Fasergewebe aus 3 K-, 6 K- und/oder 12 K-Filamentgarnen ausgebildet werden.

6. Verfahren nach einem der vorangehenden Ansprüche,
**dadurch gekennzeichnet,**
**dass** der Stapel (15, 21, 22) vor dem Aushärten und/oder der Pyrolyse verdichtet wird.

7. Verfahren nach einem der vorangehenden Ansprüche,
**dadurch gekennzeichnet,**
**dass** der Stapel (15, 21, 22) nachfolgend der Pyrolyse grafitiert wird.

8. Verfahren nach einem der vorangehenden Ansprüche,
**dadurch gekennzeichnet,**
**dass** eine erste Faserlage (14, 17, 24, 35, 42, 55, 59) des Stapels (15, 21, 22) aus einem ersten Fasergewebe und eine zweite Faserlage (14, 17, 24, 35, 42, 55, 59) des Stapels aus einem vom dem ersten Fasergewebe abweichenden zweiten Fasergewebe ausgebildet wird.

9. Verfahren nach einem der vorangehenden Ansprüche,
**dadurch gekennzeichnet,**
**dass** die Graphitfolie (13, 19, 26, 31, 37, 46, 50, 53, 61) in dem Stapel (15) als eine mittlere Lage zwischen Faserlagen (11, 34) angeordnet wird.

10. Verfahren nach einem der vorangehenden Ansprüche 1 bis 8,
**dadurch gekennzeichnet,**
**dass** die Graphitfolie (13, 19, 26, 31, 37, 46, 50, 53, 61) in dem Stapel (21) als eine von einer mittleren Lage abweichende Lage zwischen Faserlagen (11, 34) angeordnet wird.

11. Verfahren nach einem der vorangehenden Ansprüche,
**dadurch gekennzeichnet,**
**dass** die Graphitfolie (13, 19, 26, 31, 37, 46, 50, 53, 61) zumindest teilweise an ihren Rändern von den Faserlagen (11, 34, 41, 54) überdeckt wird.

12. Verfahren nach einem der vorangehenden Ansprüche,
**dadurch gekennzeichnet,**
**dass** die Faserlagen (11, 34, 41, 54) abschnittsweise mit der Graphitfolie (13, 19, 26, 31, 37, 46, 50, 53, 61) überdeckt wird, wobei die Graphitfolie eine kleinere Fläche aufweist als eine Faserlage.

13. Verfahren nach einem der vorangehenden Ansprüche,
**dadurch gekennzeichnet,**
**dass** der Stapel (15, 21, 22) an einer Profilnegativform (27) umgeformt oder der Stapel an der Profilnegativform ausgebildet wird.

14. Verfahren nach Anspruch 13,
**dadurch gekennzeichnet,**
**dass** der Stapel (15, 21, 22) vor dem Aushärten des Binders umgeformt wird.

15. Verfahren nach Anspruch 13 oder 14,
**dadurch gekennzeichnet,**
**dass** zwischen der Graphitfolie (13, 19, 26, 31, 37, 46, 50, 53, 61) und der Profilnegativform (27) eine einzige Faserlage (14, 17, 24, 35, 42, 55, 59) angeordnet wird.

16. Bauelement (10, 16, 30, 33, 40, 47, 51, 57, 62), für insbesondere Hochtemperaturanwendungen oder dergleichen, wobei das Bauelement aus kohlenstofffaserverstärkten Kohlenstoff und einer Graphitfolie (13, 19, 26, 31, 37, 46, 50, 53, 61) ausgebildet ist, wobei aus Kohlenstofffasern ausgebildete Faserlagen (14, 17, 24, 35, 42, 55, 59) des kohlenstofffaserverstärkten Kohlenstoffs zusammen mit der Graphitfolie zu einem Stapel (15, 21, 22) angeordnet sind,
**dadurch gekennzeichnet,**
**dass** die Graphitfolie (13, 19, 26, 31, 37, 46, 50, 53, 61) in dem Stapel (15, 21, 22) zwischen zumindest zwei Faserlagen (14, 17, 24, 35, 42, 55, 59) angeordnet ist.

17. Bauelement nach Anspruch 16,
**dadurch gekennzeichnet,**
**dass** das Bauelement (10, 16, 30, 33, 40, 47, 51, 57, 62) ein Profilelement ist.

18. Bauelement nach Anspruch 16 oder 17,
**dadurch gekennzeichnet,**
**dass** das Bauelement (10, 16, 30, 33, 40, 47, 51, 57, 62) biegbar ausgebildet ist.

19. Bauelement nach einem der Ansprüche 16 bis 18,
**dadurch gekennzeichnet,**
**dass** das Bauelement (10, 16, 30, 33, 40, 47, 51, 57, 62) gasdicht ist.

20. Hochtemperaturofen mit einem Bauelement (10, 16, 30, 33, 40, 47, 51, 57, 62) nach einem der Ansprüche 16 bis 19.

21. Verwendung eines aus kohlenstofffaserverstärkten Kohlenstoff und einer Graphitfolie (13, 19, 26, 31, 37, 46, 50, 53, 61) ausgebildeten Bauelements (10, 16, 30, 33, 40, 47, 51, 57, 62), wobei aus Kohlenstofffasern ausgebildete textile Faserlagen (14, 17, 24, 35, 42, 55, 59) des kohlenstofffaserverstärkten Kohlenstoffs zusammen mit der Graphitfolie zu einem Stapel (15, 21, 22) angeordnet sind, wobei die Graphitfolie in dem Stapel zwischen zumindest zwei Faserlagen angeordnet ist, zur Ausbildung einer Auskleidung eines Hochtemperaturofens.
